# EUROPEAN PATENT APPLICATION

(11) **EP 3 306 352 A1**
(43) Date of publication of application: **11.04.2018**
(21) Application number: 16803441.1
(22) Date of filing: 02.06.2016
(51) Int. Cl.: G01T 1/20, G01T 1/167, G01T 1/169, G01T 1/203

(54) **RADIOACTIVE CONTAMINATION INSPECTION DEVICE**

(30) Priority: 03.06.2015 JP 2015112825
(71) Applicant: Mitsubishi Electric Plant Engineering Corporation, Tokyo 110-0015 (JP)
(72) Inventor: KAKIUCHI, Hideaki, Tokyo 110-0015 (JP); SAKANASHI, Yohei, Tokyo 110-0015 (JP); HAYASHI, Masateru, Tokyo 100-8310 (JP); AZUMA, Tetsushi, Tokyo 100-8310 (JP); NISHIZAWA, Hiroshi, Tokyo 100-8310 (JP); SEKI, Makito, Tokyo 100-8310 (JP)
(74) Representative: Patentanwälte Geyer, Fehners & Partner mbB
(86) International application number: PCT/JP2016/066375
(87) International publication number: WO 2016/195007

(57) **Abstract**

Provided is a radioactive contamination inspection apparatus including a plastic scintillator, a light receiving element, a light guide configured to allow scintillation light emitted from the plastic scintillator to reach the light receiving element, a light shielding housing including an incidence window, and a thin film layer structure provided between the incidence window provided in the light shielding housing and the plastic scintillator, and including a protective film, a light shielding film, and a reflective film in the stated order from the incidence window side. A side surface of the light guide is made up of a diffused reflection surface. The reflective film is disposed with an air layer placed between the reflective film and the plastic scintillator. A surface of the reflective film, which faces the plastic scintillator, is made up of a specular reflection surface.

## Description

### Technical Field

The present invention relates to a radioactive contamination inspection apparatus configured to detect radioactive rays emitted from an object surface of an object to be measured to inspect the presence or absence of radioactive contamination on the object surface.

### Background Art

In facilities handling a radioactive substance, such as an atomic power plant, a nuclear fuel handling facility, and a particle accelerator facility, the presence or absence of radioactive contamination is inspected at the time of leaving a radiation controlled zone or taking an article out of the zone.

Of the radioactive rays, β-rays have a short range in the substance as compared with γ-rays, and hence β-rays emitted from objects other than the object to be measured can be shielded with ease. Accordingly, in the case of determining whether or not the object surface has been radioactively contaminated, detection of α-rays or β-rays ensures this determination.

α-rays have a shorter range as compared with β-rays, and in the case of α-rays having energy near 5 MeV emitted from an α-ray emitter represented by uranium and plutonium, α-rays can fly only about 5 cm in the air and are thus difficult to measure. Accordingly, in the facilities handling such radioactive substances as described above, radioactive contamination is inspected by detecting β-rays.

A typical β-ray detector is a detector using a Geiger-Müller (GM) tube or a plastic scintillator. The use of the plastic scintillator for the β-ray detector can increase the size of a sensitive surface, thereby enabling efficient inspection of radioactive contamination.

When β-rays are to be measured using the plastic scintillator, β-rays enter the plastic scintillator, and light emitted through interaction, namely, scintillation light, is measured using a light receiving element, for example, a photomultiplier.

When the scintillator increases in size, the number of times of reflection of the scintillation light increases and attenuation of the scintillation light increases until the scintillation light reaches the light receiving element, depending on the light emission position of the scintillation light.

For this reason, when the plastic scintillator having a large area is adopted, the number of times of reflection of scintillation light until the scintillation light reaches a light receiving surface varies depending on the light emission position of the scintillation light, and hence it is difficult to obtain uniform sensitivity in the entire sensitive surface.

Accordingly, the following methods have hitherto been used.

As one example, there is a method in which, in order to improve the positional dependency of a scintillator having a large area, a reflected light restriction unit is provided in any one of a scintillator, a light guide, and a reflective film, to make adjustment so as to reduce the positional dependency of sensitivity (see, for example, Patent Literature 1). The reflected light restriction unit is configured to change the surface roughness so as to adjust a reflectance.

As another related-art method, there is a method in which, in order to improve reflection efficiency on the scintillator surface, a reflective layer, a light shielding layer, and a protective layer are formed as an integrated laminated thin film (see, for example, Patent Literature 2).

### Citation List

### Patent Literature

[PTL 1] WO 2014/076890 A1
[PTL 2] JP 2011-232224 A

### Non Patent Literature

[NPL 1] Japan Radioisotope Association, "Radioisotope Pocket Data Book 11th edition", p. 5

### Summary of Invention

### Technical Problem

However, the related art has the following problems.

In the method of Patent Literature 1, the reflection efficiency is adjusted in accordance with a position most distant from the light receiving element, where detection sensitivity is the lowest. This reduces the positional dependency of sensitivity in the entire sensitive surface, but causes a problem of decreasing output of the detector to make distinction between the output and noise difficult.

In the method of Patent Literature 2, the reflection efficiency on the scintillator surface improves and the signal output of the detector increases. However, the method requires a light receiving element having the same area as that of the scintillator. Accordingly, a light receiving element having a large area is required for increasing the area of the scintillator, thereby causing a problem of difficulties in increasing the area of the scintillator being the sensitive surface.

The present invention has been made in order to solve the problems described above, and it is an object of the present invention to achieve a radioactive contamination inspection apparatus capable of increasing an area of a sensitive surface, the apparatus having small positional dependency of sensitivity in the entire sensitive surface and capable of obtaining larger output of a detector than in the related art even when the area of the sensitive surface is increased.

### Solution to Problem

According to one embodiment of the present invention, there is provided a radioactive contamination inspection apparatus including: a plastic scintillator, which a radioactive ray emitted from an object to be measured is to enter, and which is configured to emit scintillation light through interaction with the radioactive ray; a light receiving element configured to output an electric charge proportional to an amount of the scintillation light that has reached the light receiving element; a light guide, which is provided between the plastic scintillator and the light receiving element, and is configured to allow the scintillation light, which is emitted from the plastic scintillator, to reach the light receiving element; a light shielding housing, which is provided so as to shield the plastic scintillator, the light guide, and the light receiving element from external light, and includes an incidence window for allowing the radioactive ray, which is emitted from the object to be measured, to enter the plastic scintillator; and a thin film layer structure, which is provided between the incidence window provided in the light shielding housing and the plastic scintillator, and includes a protective film, a light shielding film, and a reflective film in the stated order from the incidence window side. In the radioactive contamination inspection apparatus, a side surface of the light guide is made up of a diffused reflection surface, the reflective film is disposed with an air layer placed between the reflective film and the plastic scintillator, and a surface of the reflective film, which faces the plastic scintillator, is made up of a specular reflection surface.

### Advantageous Effects of Invention

According to the present invention, the thin film layer structure including the protective film, the light shielding film, and the reflective film is provided on the incidence window side, the side surface of the light guide is formed as the diffused reflection surface, the reflective film and the plastic scintillator are disposed with the air layer placed therebetween, and the surface of the reflective film, which faces the plastic scintillator, has the specular reflection surface. Consequently, it is possible to achieve the radioactive contamination inspection apparatus capable of increasing an area of a sensitive surface, the apparatus having small positional dependency of sensitivity in the entire sensitive surface and capable of obtaining larger output of a detector than in the related art even when the area of the sensitive surface is increased.

### Brief Description of Drawings

FIG. 1 is a diagram for illustrating a configuration of a radioactive contamination inspection apparatus according to a first embodiment of the present invention.
FIG. 2 is a diagram for illustrating a scintillation light collecting method in the first embodiment of the present invention;
FIG. 3 is a diagram for illustrating a configuration of a radioactive contamination inspection apparatus according to a second embodiment of the present invention.
FIG. 4 is a diagram for illustrating a configuration of the radioactive contamination inspection apparatus according to the second embodiment of the present invention, which has a protective film different from that of FIG. 3.
FIG. 5 is a configuration diagram at the time of adopting a protective film made sensitive only to β-rays that enter the protective film from a specific region of an object to be measured in the radioactive contamination inspection apparatus according to the second embodiment of the present invention.
FIG. 6 is a configuration diagram at the time of adopting a protective film made sensitive to all β-rays that enter the protective film from a region wider than a sensitive surface in the radioactive contamination inspection apparatus according to the second embodiment of the present invention.
FIG. 7 is a diagram for illustrating a configuration of a radioactive contamination inspection apparatus according to a third embodiment of the present invention.
FIG. 8 is a diagram for illustrating a configuration of the radioactive contamination inspection apparatus according to the third embodiment of the present invention, which is different from the configuration of FIG. 7.
FIG. 9 is a diagram for illustrating a configuration of a radioactive contamination inspection apparatus according to a fourth embodiment of the present invention.

### Description of Embodiments

Now, radioactive contamination inspection apparatus according to preferred embodiments of the present invention are described with reference to the drawings.

### First Embodiment

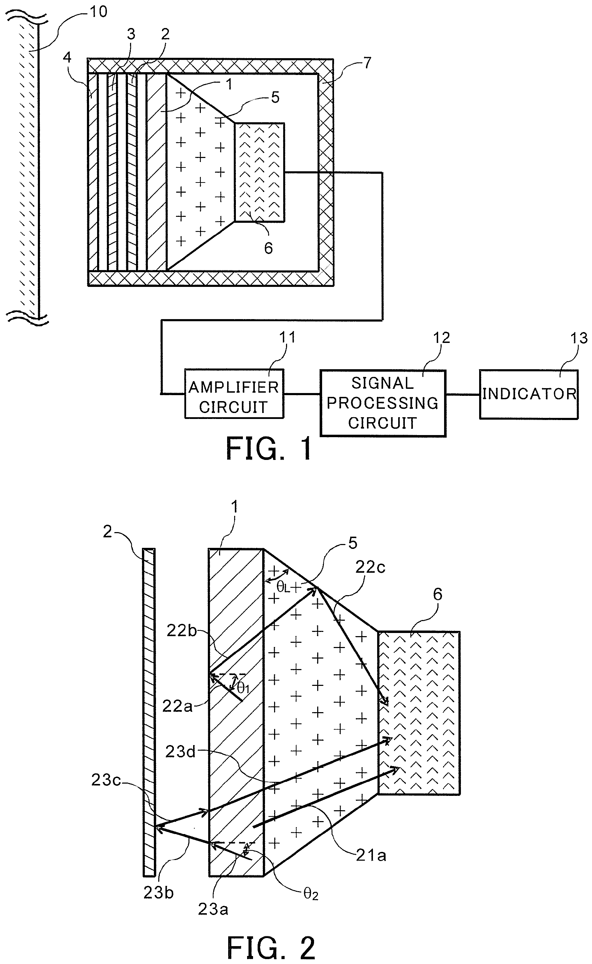

FIG. 1 is a diagram for illustrating a configuration of a radioactive contamination inspection apparatus according to a first embodiment of the present invention. The radioactive contamination inspection apparatus according to the first embodiment includes a plastic scintillator 1 configured to emit scintillation light through interaction with radioactive rays, a light guide 5 for guiding the scintillation light to a light receiving element 6, and a light shielding housing 7 for shielding the plastic scintillator 1, the light guide 5, and the light receiving element 6 from external light.

The light shielding housing 7 includes an incidence window on a measuring-object-side surface of the plastic scintillator 1. The incidence window has a thin film layer structure formed therein, which is configured by disposing a protective film 4, a light shielding film 3, and a reflective film 2 in the stated order from the outside. Further, the plastic scintillator 1 and the reflective film 2 are disposed at an interval.

When β-rays are emitted from a radioactive substance adhering to a surface of an object 10 to be measured, the β-rays pass through the incidence window to enter the plastic scintillator 1. When the β-rays enter the plastic scintillator 1, the β-rays provide energy to the plastic scintillator 1 to generate scintillation light in the plastic scintillator 1.

The number of scintillation light rays generated is proportional to the energy provided to the plastic scintillator 1. Accordingly, the number of scintillation light rays is proportional to an amount of loss of β-ray energy.

The scintillation light is guided to the light receiving element 6 via the light guide 5. A photomultiplier is typically used as the light receiving element 6. However, a variety of optical semiconductors such as PIN photodiode or an avalanche photodiode, or an optical sensor such as an image intensifier, may be used as the light receiving element 6.

Next, a method of decreasing the positional dependency of sensitivity in the entire sensitive surface is described with reference to FIG. 2. FIG. 2 is a diagram for illustrating a scintillation light collecting method in the first embodiment of the present invention. In FIG. 2, only the scintillator 1, the reflective film 2, the light guide 5, and the light receiving element 6 are illustrated as a configuration necessary for the description.

Further, θL, θ1, and θ2 illustrated as angles in FIG. 2 have the following meanings, respectively:
θL: an angle formed by the surface of the light guide 5 in contact with the scintillator 1 and the side surface of the light guide 5
θ1: an incidence angle of a scintillation light ray 22a, which is emitted to the incidence window side, on the boundary surface between the scintillator 1 and an air layer, the angle corresponding to an angle larger than a critical angle θc
θ2: an incidence angle of a scintillation light ray 23a, which is emitted to the incidence window side, on the boundary surface between the scintillator 1 and the air layer, the angle corresponding to an angle smaller than a critical angle θc

Details of the scintillation light rays 22a and 23a and the critical angle θc are described later.

The arrows of FIG. 2 each represent a locus of a scintillation light ray generated in the scintillator 1. The scintillation light rays are emitted in random directions regardless of the incidence direction of β-rays. Accordingly, the arrows of FIG. 2 each represent a locus of one of those scintillation light rays.

The scintillation light ray 21a is emitted in the direction of the light guide 5 and reaches the light receiving element 6 without being reflected on the light guide 5.

The scintillation light ray 22a is emitted to the incidence window side. Assuming here that a reflective index of the plastic scintillator 1 is represented by n₁, the critical angle θc on the boundary surface between the plastic scintillator 1 and the air is as follows:

At this time, the scintillation light ray 22a having reached the boundary surface at an angle larger than the critical angle θc is totally reflected. The scintillation light ray 22a illustrated in FIG. 2 has reached the surface of the scintillator 1 at the angle θ1, which is larger than the critical angle, and hence the scintillation light ray 22a is totally reflected on the boundary surface, moves in a direction of a scintillation light ray 22b, and is reflected on the side surface of the light guide 5.

The side surface of the light guide 5 is a diffused reflection surface. Accordingly, an amount of reflected light follows a probability distribution of dI/dθ∝cosθ with respect to a reflection angle θ in the case of no diffused reflection. The scintillation light ray 22b is reflected in a direction of a scintillation light ray 22c in accordance with this probability distribution, and reaches the light receiving element 6.

As described above, the scintillation light rays are emitted in all directions regardless of incidence directions of β-rays, and are reflected on the side surface of the light guide 5 in directions that follow the probability distribution of dI/dθ∝cosθ. Accordingly, the scintillation light rays come into the state of flying around in random directions in the light guide 5.

This results in reduction in dependency of the ratio of the scintillation light reaching the light receiving element 6 on the light emission position of the scintillation light. This can reduce the positional dependency. Further, when the angle θL of the side surface of the light guide 5 is made larger than the critical angle θc, the ratio of the scintillation light reaching the light receiving element 6 can be increased.

In a case where the side surface of the light guide 5 is not the diffused reflection surface but a specular reflection surface at this time, when the angle of the side surface of the light guide 5 with respect to the incidence surface of the plastic scintillator 1 is smaller than a predetermined angle, the number of times of reflection of scintillation light until the light reaches the light receiving element 6 increases.

For example, even on such a mirror surface as to be obtained by forming a metal film on the side surface of the light guide 5, a loss due to reflection slightly occurs. Accordingly, the ratio of the scintillation light reaching the light receiving element 6 decreases due to an increase in number of times of reflection. At this time, depending on the angle, there may occur a situation in which reflection is repeated between the side surface of the light guide 5 and the incidence surface of the plastic scintillator 1 and the scintillation light does not reach the light receiving element at all.

Further, when a reflection member is not provided on the side surface of the light guide 5 and total reflection on the boundary surface between the side surface of the light guide 5 and the air is to be used, the angle of the side surface of the light guide 5 needs to be made larger than the critical angle, which is determined in accordance with a reflective index of the light guide 5. However, with the scintillation light emitted in the random directions, the light entering the side surface of the light guide 5 at an angle larger than the critical angle is restricted to part of the scintillation light, and the ratio of the scintillation light reaching the light receiving element 6 is small.

This also applies to the case of using an optical fiber as the light guide 5. When this method is used, the length of the light guide 5 is determined in accordance with the size of the light receiving surface of the light receiving element 6 and the size of the sensitive surface of the plastic scintillator 1. This increases the length of the light guide 5 to cause a problem of increasing the size of the entire apparatus.

The scintillation light ray 23a is emitted to the incidence window side, similarly to the scintillation light ray 22a, but the incidence angle θ2 on the boundary surface is smaller than the critical angle θc. Accordingly, the scintillation light ray 23a is not totally reflected but refracted in a direction of a scintillation light ray 23b and emitted from the plastic scintillator 1.

The reflective film 2 is a specular reflection surface. Accordingly, the scintillation light ray 23b is reflected in a direction of a scintillation light ray 23c at the same angle as the incidence angle on the reflective film 2, and the scintillation light ray 23c then enters the plastic scintillator 1 and is refracted in a direction of a scintillation light ray 23d to reach the light receiving element 6.

When the surface of the reflective film 2 is a diffused reflection surface, the probability decreases for the scintillation light reflected on the reflective film 2 to enter the plastic scintillator 1 again. The ratio of the scintillation light reaching the light receiving element 6 thus decreases.

Further, when the distance between the reflective film 2 and the plastic scintillator 1 is excessively long, there increases a ratio of the light entering the light shielding housing 7 without directly entering the plastic scintillator 1 by reflection on the reflective film 2. This causes a decrease in the ratio of the scintillation light reaching the light receiving element 6.

As a rough indication, from a result of measurement performed while changing the distance between the plastic scintillator 1 and the reflective film 2, it has been found that it is appropriate to set the distance between the plastic scintillator 1 and the reflective film 2 to a value of from 1 mm to 2 mm.

Further, when the reflective film is not disposed on the incidence surface, the scintillation light emitted from the plastic scintillator 1 is not reflected but disappears. This causes a decrease in the ratio of the scintillation light reaching the light receiving element 6.

With the above-mentioned configuration of FIG. 2 of the plastic scintillator 1, the reflective film 2, the light guide 5, and the light receiving element 6, the ratio of the scintillation light reaching the light receiving element 6 is less dependent on the light emission position of the scintillation light. That is, it is possible to achieve a plastic scintillator with small positional dependency of sensitivity in the entire sensitive surface.

Next, the structure of the incidence window in the first embodiment of the present invention is described. As described above, the reflective film 2 needs to be the mirror surface in order to reflect a component that is not totally reflected on the surface of the scintillator 1 in the direction of the scintillator 1. At the same time, the incidence window needs to have necessary light shielding performance and have sufficient strength against a powder dust and a solid flying object in consideration of the outdoor use.

In order to ensure light shielding performance when the incidence window is formed of an integrated thin film, in the case where the film is a resin film, the film needs to have a thickness of tens of µm or more. Meanwhile, in the case where the film is a metal thin film, for example, aluminum foil, the film can obtain necessary light shielding performance by having a thickness of about several micrometers, whereas having insufficient strength against a powder dust and a solid flying object.

When the thickness of the incidence window is increased, the light shielding performance and the strength can be ensured, but causes a problem of attenuation of β-rays. When β-rays pass through the incidence window, part of kinetic energy of the β-rays is given to the incidence window through interaction with the incidence window, and the kinetic energy of the β-rays thus decreases. When the incidence window is sufficiently thick, β-rays lose all the kinetic energy and become unable to pass through the incidence window. A transmittance of β-rays can be calculated using Expression (1).
(1) In Expression (1), I₀ is the number of incident β-rays, I is the number of β-rays after passing through a material, and t is a thickness of a material through which β-rays pass, namely, the incidence window, the thickness being represented by units of mg/cm². µ is called an absorption coefficient (unit: cm²/mg) of β-rays, and can be obtained by an empirical expression of Expression (2).
(2) In Expression (2), E is the maximum energy of β-rays, which is represented by units of MeV. Expression (2) is quoted from Non Patent Literature 1.

For example, when β-rays of the object to be measured are β-rays emitted from 137Cs (in the case of the maximum energy of 0.514 MeV) and when the incidence window is aluminum having a thickness of 1 µm,
an absorption coefficient is: 0.017×0.514^{-1.43}=0.044, and a surface density of a thickness of 1 µm is 0.27 mg/cm².

Accordingly, a transmittance is obtained as: e^{-0.044×0.27}=0.99.

Similarly, when the incidence window is a PET resin having a thickness of 50 µm, a surface density is 6.9 g/cm².

Accordingly, a transmittance is obtained as: e^{-0.044×6.9}-0.74

As described above, while the light shielding performance and the strength are ensured, the thickness of the incidence window needs to be made as small as possible so as to reduce attenuation of β-rays.

There are two cases of the maximum energy from 137Cs described above, which are 0.514 MeV (a branch ratio of 94.4%) and 1.176 MeV (a branch ratio of 5.6%)

When the incidence window is an integrated thin film, for example, there is often used a method of mounting a reflective film by application of tension thereto, the reflective film having an aluminum mirror surface formed on a thin resin film having a thickness of about several micrometers by vapor deposition or sputtering. However, with the metal layer being thin, when a pinhole is generated, the light shielding performance is unavoidably lost.

Thus, there is also a method of eliminating a pinhole by performing vapor deposition a plurality of times, for example. However, even in the case where this method is adopted, when the incidence window receives a shock from flying of a solid, a pinhole or the like may be formed in the metal layer although the resin film is not damaged, and the light shielding performance may thus be lost.

In view of the above, the present invention has a technical feature that the incidence window is divided into the reflective film 2, the light shielding film 3, and the protective film 4, to adopt combination of the smallest thicknesses of the incidence window.

Due to the division into the reflective film 2 and the light shielding film 3, the reflective film 2 may be a film that insufficiently shields light. For example, it is possible to use, as the reflective film 2, a film having an aluminum mirror surface having the minimum necessary thickness formed on a thin resin film having a thickness of about several micrometers by vapor deposition or sputtering. The reflective film 2 formed in such a manner is stretched by application of tension to form a mirror surface on which attenuation of β-rays is small.

The light shielding film 3 does not contribute to reflection of the scintillation light and thus need not be a mirror surface. Accordingly, the light shielding film 3 can be stretched while being warped without application of tension thereto so as to avoid damage due to mechanical deformation or thermal deformation of the light shielding housing 7.

When the resin film is used as the light shielding film 3, the resin film is required to have a thickness of about several ten micrometers, which causes an increase in attenuation of β-rays. A metal thin film having a thickness of several micrometers is thus used as the light shielding film 3. The metal thin film has insufficient strength against a powder dust and a solid flying object, and the light shielding performance may thus be lost due to damage. However, the division into the light shielding film 3 and the protective film 4 enables the use of the metal thin film with insufficient strength as the light shielding film 3.

The protective film 4 does not contribute to the light shielding performance, and hence the protective film 4 may insufficiently shield light, and it is possible to use a resin film having a thickness of about 10 µm and high strength against a powder dust and a solid flying object.

In such a manner, the incidence window is divided into three layers being the reflective film 2, the light shielding film 3, and the protective film 4 such that the respective films have optimum thicknesses, thereby enabling adoption of combination of the smallest thicknesses of the incidence window.

Next, the operation after the scintillation light has reached the light receiving element 6 is described with reference to FIG. 1. The light receiving element 6 outputs an electric charge proportional to an amount of the scintillation light that has reached the light receiving element 6 by photoelectric conversion. The light emission duration of the scintillation light is about several nanoseconds in the case of a typical plastic scintillator 1. The photoelectric conversion in the light receiving element 6 is also completed in about several nanoseconds.

For this reason, the output of the light receiving element 6 is completed within the time of about several nanoseconds. That is, the electric charge proportional to the amount of the scintillation light that has reached the light receiving element 6 is output as a pulse from the light receiving element 6.

The order for the electric charge output from the light receiving element 6 is the level of pC, and hence the electric charge is amplified by an amplifier circuit 11 and input into a signal processing circuit 12. At this time, the amplifier circuit 11 amplifies the signal such that the electric charge output by the light receiving element 6 is proportional to a pulse wave height.

Accordingly, the wave height value of the pulse output by the amplifier circuit 11 is proportional to the number of scintillation light rays generated in the plastic scintillator 1, namely, the energy provided by β-rays to the plastic scintillator 1.

Subsequently, in order to distinguish between a signal generated by radioactive rays and noise, the signal processing circuit 12 sets a threshold with respect to an input signal to separate noise and a signal from each other. The wave height of the pulse output from the amplifier circuit 11 is proportional to energy provided by β-rays to the plastic scintillator 1. For this reason, when the pulse wave height does not exceed a predetermined threshold, the signal processing circuit 12 does not make a count, and only when the pulse wave height exceeds the threshold, the signal processing circuit 12 makes a count of the number as a signal generated by β-rays.

The signal processing circuit 12 further calculates a surface contamination density from the counted value through use of a relational expression between a counted value and a surface contamination density, which is previously defined by calibration using a standard source or the like. The signal processing circuit 12 then causes an indicator 13 to display the calculated surface contamination density.

As described above, the radioactive contamination inspection apparatus according to the first embodiment has the following features:
- The incidence window has a configuration of being divided into three layers, which are the protective film, the light shielding film, and the reflective film, in the stated order from the outside.
- The scintillator and the reflective film are disposed facing each other with the air layer placed therebetween.
- The side surface of the light guide that guides scintillation light to the light receiving element is configured as the diffused reflection surface.

With such a configuration provided, it is possible to achieve a detector with small positional dependency of sensitivity in the entire sensitive surface even when a plastic scintillator having a large area is used. This can result in reduction in time taken for inspection of radioactive contamination.

### Second Embodiment

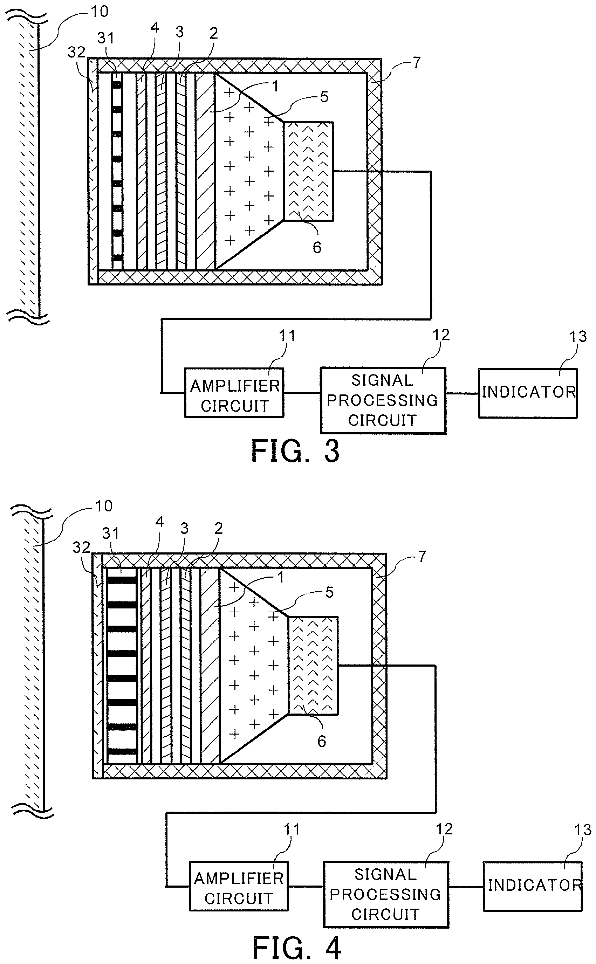

FIG. 3 is a diagram for illustrating a configuration of a radioactive contamination inspection apparatus according to a second embodiment of the present invention. The radioactive contamination inspection apparatus according to the second embodiment illustrated in FIG. 3 is different from the configuration of FIG. 1 in the first embodiment in terms of further including a protective screen 31 and an antistatic protective film 32 outside the protective film 4. Accordingly, the following description is given while focusing on those differences.

The protective screen 31 is mounted for the purpose of preventing damage on an incidence window when the radioactive contamination inspection apparatus is used in the outdoor or an object to be measured has many protrusions. The opening surface of the protective screen 31 has such a size as not to allow passage of a solid flying material and a protrusion that can damage the protective film 4, and has a structure having a large opening ratio. The material of the protective screen 31 is not necessarily a metal, but may be a material for a resin plate or a fibrous material with high strength.

FIG. 4 is a diagram for illustrating a configuration of the radioactive contamination inspection apparatus according to the second embodiment of the present invention, which is different from that of FIG. 3 above in terms of the protective screen 31. As illustrated in FIG. 4, when the thickness of the protective screen 31 is increased and its opening is formed into a collimator shape, it is possible to allow selective passage of only β-rays entering the protective screen 31 from a specific direction. With such a structure formed, it is also possible to make the protective film 31 sensitive only in the specific direction.

Further, the use of resin mainly composed of a light element as the material for the protective screen 31 enables reduction in generation of Bremsstrahlung X-rays generated due to collision of β-rays with the protective screen 31, and reduction in background noise.

Moreover, with the protective screen 31 made up of a movable plate, a direction in which the protective screen 31 has sensitivity can be made variable.

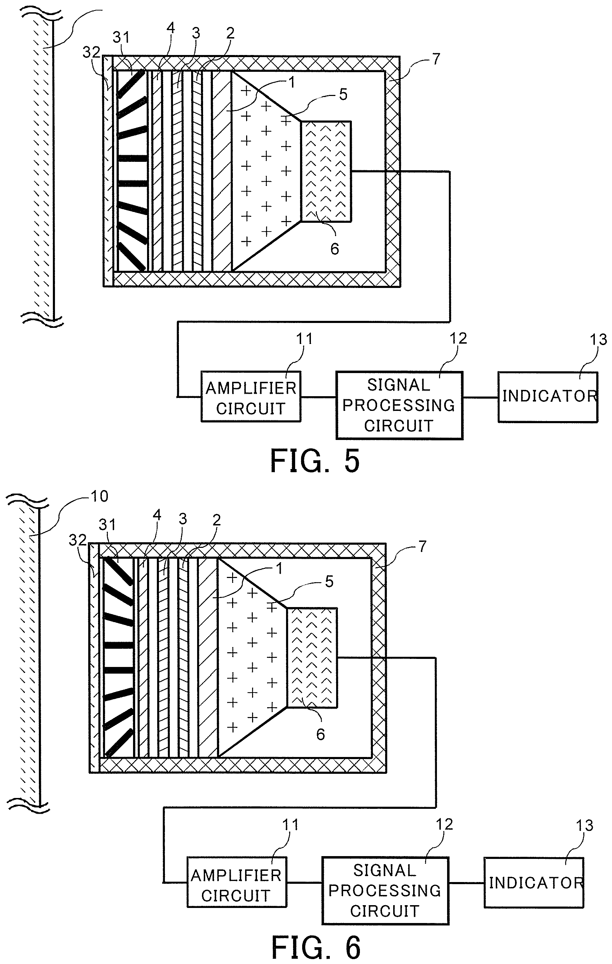

FIG. 5 is a configuration diagram at the time of adopting the protective screen 31 made sensitive only to β-rays that enter the radioactive contamination inspection apparatus from a specific region of an object to be measured in the radioactive contamination inspection apparatus according to the second embodiment of the present invention. As illustrated in FIG. 5, with the protective screen 31 made up of the movable plate, it is possible to focus on a specific place of the object to be measured.

FIG. 6 is a configuration diagram at the time of adopting the protective screen 31 made sensitive to all β-rays that enter the radioactive contamination inspection apparatus from a region wider than the sensitive surface in the radioactive contamination inspection apparatus according to the second embodiment of the present invention. With the protective screen 31 made up of the movable plate as in FIG. 6, it is possible to cover the whole object to be measured when the object to be measured is wider than the sensitive surface.

The antistatic protective film 32 is mounted for the purpose of preventing self-contamination of the apparatus due to adhesion of a powder dust containing a radioactive substance to the incidence window in the outdoor use. When the powder dust containing a radioactive substance adheres to the protective screen 31, it is difficult to remove that power dust. Therefore, the antistatic protective film 32 is mounted outside the protective screen 31, resulting in that the outermost layer of the apparatus is made up of the light shielding housing 7 and the antistatic protective film 32.

As described above, the radioactive contamination inspection apparatus according to the second embodiment further includes the following features in addition to the features of the first embodiment:
- The protective screen is mounted on the front surface of the protective film.
- For the protective screen, resin mainly composed of a light element can be used as the material.
- The protective screen can include a plurality of movable plates.
- The antistatic protective film can be provided outside the incidence window.

With such a configuration provided, it is possible to achieve an incidence window that has sufficient strength against a solid flying material and a protrusion of an object to be measured and can prevent self-contamination due to adhesion of a radioactive substance to the incidence window. It is also possible to perform contamination inspection in the case of outdoor use and on an object to be measured having a complicated shape with many protrusions. Further, by forming the protective screen from the material for the resin mainly composed of a light element, it is possible to reduce background noise.

While the case of using both the protective screen 31 and the antistatic protective film 32 is described in the second embodiment, it is also possible to adopt a configuration including any one of those.

### Third Embodiment

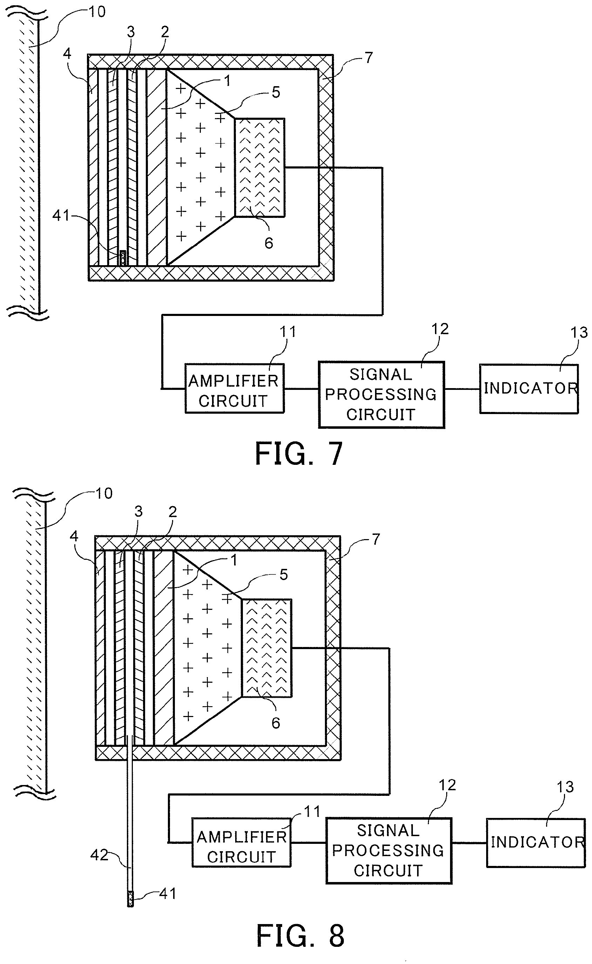

FIG. 7 is a diagram for illustrating a configuration of a radioactive contamination inspection apparatus according to a third embodiment of the present invention. The radioactive contamination inspection apparatus according to the third embodiment illustrated in FIG. 7 is different from that of FIG. 1 in the first embodiment in terms of further including a light emitting diode 41 between the reflective film 2 and the light shielding film 3. Accordingly, the following description is given while focusing on this difference.

The light emitting diode 41 is provided for the purpose of confirming the soundness of each of the light receiving element 6, the amplifier circuit 11, the signal processing circuit 12, and the indicator 13. As the light emitting diode 41, there can be used a light emitting diode configured to generate light having the same wavelength band as that of the scintillation light, or a light emitting diode configured to emit light having a different wavelength band from that of the scintillation light as long as the wavelength band is a wavelength band in which the light receiving element has sensitivity.

The scintillation light generated by incidence of β-rays is as week as about 1,000 photons. In contrast, an amount of light generated by the light emitting diode is, generally, much larger than that of the scintillation light generated by β-rays.

For this reason, in order to cause light that is generated by the light emitting diode 41 to directly enter the light receiving element 6, it is necessary to restrict the amount of light to enter the light receiving element 6 to about the amount of the scintillation light generated by β-rays through use of a light shielding plate for light attenuation. However, when the light emitting diode 41 is disposed closer to the light receiving element 6 side than the reflective film 2 is, the light emitting diode 41 may optically influence collection of the scintillation light.

Although the reflective film 2 has insufficient light shielding performance against external light, the reflective film 2 uses a reflective film having a mirror surface formed thereon, the mirror surface being a metal layer having the minimum necessary thickness for ensuring reflection performance, and allows transmission of a minute amount of light.

Thus, in the third embodiment, using this property, the light emitting diode 41 is disposed between the reflective film 2 and the light shielding film 3, and the light generated by the light emitting diode 41 is attenuated by the reflective film 2 and caused to enter the plastic scintillator 1. This eliminates the need to separately provide a light reduction plate for attenuating the light of the light emitting diode and allows the use of a normal light emitting diode as the light emitting diode 41 instead of a light emitting diode that generates weak light.

FIG. 8 is a diagram for illustrating a configuration of a radioactive contamination inspection apparatus according to the third embodiment of the present invention, which is different from the configuration of FIG. 7. As illustrated in FIG. 8, it is also possible to dispose the light emitting diode 41 outside the light shielding housing 7 and adopt a configuration in which light generated by the light emitting diode 41 is caused to enter a portion between the reflective film 2 and the light shielding film 3 via optical fiber 42.

The light generated by the light emitting diode 41 reaches the light receiving element 6 via the plastic scintillator 1 and the light guide 5. The light receiving element 6 has the sensitivity to light having the same wavelength band as that of the scintillation light, and hence the light receiving element 6 performs photoelectric conversion also on the light of the light emitting diode 41 and outputs a pulse.

The light emission time for the light emitting diode 41 is set to match a characteristic of the light emission time for the scintillation light or a characteristic of the amplifier circuit 11, and thus the amplifier circuit 11 outputs a pulse similar to the pulse in the case of generating the scintillation light generated by β-rays.

After that, a pulse wave height and a pulse counted value are obtained in the signal processing circuit 12, and a previously set light emission amount of the light emitting diode 41 is compared with a light emission frequency obtained as a counted value. In this manner, it is possible to confirm that the radioactive contamination inspection apparatus is in normal operation without using a radioactive source for checking.

While the light emitting diode 41 can be operated only during an operation test that is performed in a predetermined cycle, the light emitting diode 41 can also be caused to emit light at all times during actual measurement. When the light emitting diode 41 is operated only during the operation test, it is considered that, for example, the light emitting diode 41 is used by switching an operation mode between the normal measurement and the operation test, for example, between a measurement mode and a test mode, in the signal processing circuit 12.

When the light emitting diode 41 is operated only during the operation test, the pulse is obviously generated by the light emitting diode, and hence the light emission time for the light emitting diode 41 may be the same as the light emission time characteristic of the scintillation light. Further, an amount of light passing through the reflective film 2 to enter the plastic scintillator 1 may be the same as the amount of the scintillation light in the case of detecting β-rays.

At this time, when the light amount of the light emitting diode 41 is close to the amount of the scintillation light in the case of detecting β-rays, those two amounts may be confused. In this case, by increasing the light amount of the light emitting diode 41 and decreasing the output of the light receiving element 6, the amount of the scintillation light in the case of detecting β rays can be made significantly lower than the light amount of the light emitting diode 41.

Accordingly, it is possible to make the light amount of the light emitting diode significantly different from the amount of the scintillation light in the case of detecting β-rays, and thus it is possible to more accurately identify the pulse generated by the light emitting diode 41.

When a photomultiplier is used for the light receiving element 6, reduction of a voltage applied to the photomultiplier can make the amount of the scintillation light in the case of detecting β-rays significantly smaller than the light amount of the light emitting diode 41.

Meanwhile, when the light emitting diode 41 is caused to emit light at all times, the amount of the light passing through the reflective film 2 to enter the plastic scintillator 1 is made significantly different from the amount of the scintillation light in the case of detecting β-rays such that the wave heights can be distinguished in the signal processing circuit 12.

When the light emission time for the light emitting diode 41 is to be made shorter or longer than the light emission time for the scintillation light, it is possible to distinguish the pulse generated by β-rays and the pulse generated by the light emitting diode 41 based on a difference in pulse width. Accordingly, the amount is not necessarily required to be an amount significantly different from the amount of the scintillation light in the case of detecting β-rays.

In this case, the soundness of the apparatus can be constantly confirmed also during measurement, and hence it is possible to check in real time an unusual event caused by an environmental factor such as a temperature or a moisture, fluctuation in power voltage, or the like, thereby improving the reliability of a measurement result. Such a checking function can be executed by the signal processing circuit 12 serving as a controller.

As described above, the radioactive contamination inspection apparatus according to the third embodiment further includes the following features in addition to the features of the first embodiment:
- The light emitting diode is provided between the reflective film and the light shielding film.
- Light of the light emitting diode is caused to enter a portion between the reflective film and the light shielding film via the optical fiber, and the light emitting diode may be provided outside the light shielding housing.

With such a configuration provided to cause the light of the light emitting diode to enter a portion between the reflective film and the light shielding film, it is possible to confirm the soundness of the radioactive contamination inspection apparatus without using the radioactive source for checking.

The configurations illustrated in FIG. 7 and FIG. 8 are also applicable to the configurations of FIG. 3 to FIG. 6 formed by further including the protective screen 31 and the antistatic protective film 32 in the second embodiment, and similar effects can also be obtained in this case.

### Fourth Embodiment

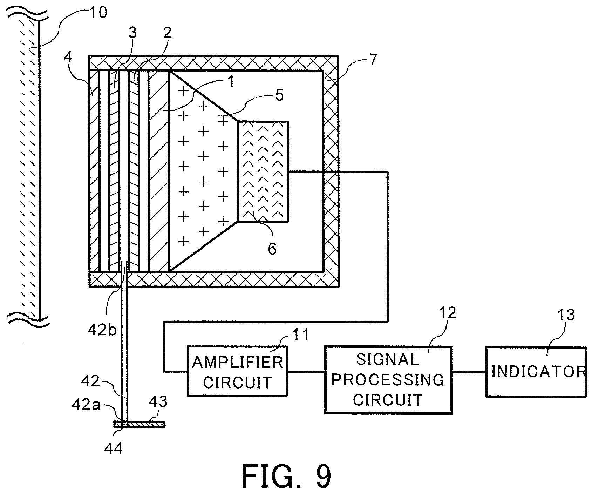

FIG. 9 is a diagram for illustrating a configuration of a radioactive contamination inspection apparatus according to a fourth embodiment of the present invention. The radioactive contamination inspection apparatus according to the fourth embodiment illustrated in FIG. 9 is different from the configuration of FIG. 8 in the third embodiment in terms of further including a shutter 43 and an opening 44 in place of the light emitting diode 41. Accordingly, the following description is given while focusing on this difference.

In the optical fiber 42 in the fourth embodiment, an incidence portion 42a is outside the light shielding housing 7, and in the incidence portion 42a, the shutter 43 openable and closable at any time intervals is provided. When the opening 44 of the shutter 43 is in an open state, light outside the light shielding housing enters the optical fiber 42.

A light emitting portion 42b of the optical fiber 42 is disposed between the reflective film 2 and the light shielding film 3, and light outside the light shielding housing enters a portion between the reflective film 2 and the light shielding film 3, is attenuated to the same degree as the amount of the scintillation light in the case of detecting β-rays on the reflective film 2, and enters the plastic scintillator 1.

The opening time for the opening 44 of the shutter 43 is set to match the light emission time for the scintillation light or a characteristic of the amplifier circuit 11, and thus the amplifier circuit 11 outputs a pulse similar to the pulse in the case of generating the scintillation light by β-rays.

A pulse wave height and a pulse counted value are obtained in the signal processing circuit 12 after the pulse is output from the amplifier circuit 11. A previously set light emission amount is compared with light emission frequency obtained as the counted value, thereby enabling confirmation that the radioactive contamination inspection apparatus is in normal operation without using the radioactive source for checking.

At this time, when the amount of the light outside the light shielding housing is close to the amount of the scintillation light in the case of detecting β-rays, those two amounts may be confused. In this case, by increasing the amount of the light outside the light shielding housing and decreasing the output of the light receiving element 6, the amount of the scintillation light in the case of detecting β-rays can be made significantly lower than the amount of the light outside the light shielding housing.

Accordingly, it is possible to make the amount of the light outside the light shielding housing significantly different from the amount of the scintillation light in the case of detecting β-rays, and thus it is possible to more accurately identify the pulse by the light outside the light shielding housing.

When a photomultiplier is used for the light receiving element 6, reduction of a voltage applied to the photomultiplier can make the amount of the scintillation light in the case of detecting β-rays significantly smaller than the amount of the light outside the light shielding housing.

As described above, the radioactive contamination inspection apparatus according to the fourth embodiment further includes the following feature in addition to the features of the first embodiment:
- The apparatus includes a configuration in which light outside the light shielding housing is caused to enter a portion between the reflective film and the light shielding film via the optical fiber.

With such a configuration provided, it is possible to confirm the soundness of the radioactive contamination inspection apparatus without using the radioactive source for checking.

The configuration illustrated in FIG. 9 is also applicable to the configurations of FIG. 3 to FIG. 6 formed by further including the protective screen 31 and the antistatic protective film 32 in the second embodiment, and similar effects can also be obtained in this case.

## Claims

1. A radioactive contamination inspection apparatus, comprising:
a plastic scintillator, which a radioactive ray emitted from an object to be measured is to enter, and which is configured to emit scintillation light through interaction with the radioactive ray;
a light receiving element configured to output an electric charge proportional to an amount of the scintillation light that has reached the light receiving element;
a light guide, which is provided between the plastic scintillator and the light receiving element, and is configured to allow the scintillation light, which is emitted from the plastic scintillator, to reach the light receiving element;
a light shielding housing, which is provided so as to shield the plastic scintillator, the light guide, and the light receiving element from external light, and includes an incidence window for allowing the radioactive ray, which is emitted from the object to be measured, to enter the plastic scintillator; and
a thin film layer structure, which is provided between the incidence window provided in the light shielding housing and the plastic scintillator, and includes a protective film, a light shielding film, and a reflective film in the stated order from the incidence window side,
wherein a side surface of the light guide includes a diffused reflection surface,
wherein the reflective film is disposed with an air layer placed between the reflective film and the plastic scintillator, and
wherein a surface of the reflective film, which faces the plastic scintillator, includes a specular reflection surface.

2. A radioactive contamination inspection apparatus according to claim 1, wherein an angle of the side surface of the light guide with respect to an incidence surface of the plastic scintillator is larger than a critical angle on a boundary surface between the plastic scintillator and the air layer.

3. A radioactive contamination inspection apparatus according to claim 1 or 2,
wherein the protective film, the light shielding film, and the reflective film, which form the thin film layer structure, are provided as different structures, and
wherein the reflective film is mounted by application of tension to the reflective film.

4. A radioactive contamination inspection apparatus according to any one of claims 1 to 3,
wherein the protective film, the light shielding film, and the reflective film, which form the thin film layer structure, are provided as different structures, and
wherein the light shielding film is mounted while being warped without application of tension to the light shielding film.

5. A radioactive contamination inspection apparatus according to any one of claims 1 to 4, further comprising a protective screen, which is provided on an opposite surface side of the protective film to a surface facing the light shielding film.

6. A radioactive contamination inspection apparatus according to claim 5, wherein the protective screen includes a movable plate capable of selectively allowing passage of only a β-ray that enters the movable plate from a specific direction, and an incidence direction of the β-ray, which is restricted by the protective screen, is variably set in accordance with an orientation of the movable plate.

7. A radioactive contamination inspection apparatus according to claim 5 or 6, wherein the protective screen is made of resin including a light element.

8. A radioactive contamination inspection apparatus according to any one of claims 1 to 7, further comprising an antistatic protective film, which is provided on an outermost layer of the incidence window,
wherein an outermost layer of the apparatus includes the light shielding housing and the antistatic protective film.

9. A radioactive contamination inspection apparatus according to any one of claims 1 to 8, wherein the air layer is provided such that a distance from the plastic scintillator to the reflective film is between 1 mm and 2 mm.

10. A radioactive contamination inspection apparatus according to any one of claims 1 to 9, further comprising a light emitting diode configured to allow dummy light to enter any one of transmission routes of the scintillation light from the light shielding film to the light receiving element, the dummy light having the same wavelength band as a wavelength band of the scintillation light.

11. A radioactive contamination inspection apparatus according to claim 10,
wherein the light emitting diode is disposed between the light shielding film and the reflective film, or disposed outside the light shielding housing via an optical fiber, which is provided so as to guide the dummy light between the light shielding film and the reflective film, and
wherein the light emitting diode is configured to allow the dummy light to pass through the reflective film to enter the plastic scintillator.

12. A radioactive contamination inspection apparatus according to any one of claims 1 to 9, further comprising an optical fiber including, at both ends:
a light emitting portion, which is disposed so as to guide the dummy light between the light shielding film and the reflective film; and
an incidence portion, which is disposed outside the light shielding housing, and includes a shutter openable and closable at any time intervals,
wherein the optical fiber is configured to bring the shutter into an open state to guide light outside the light shielding housing as the dummy light and allow the dummy light to pass through the reflective film to enter the plastic scintillator.

13. A radioactive contamination inspection apparatus according to any one of claims 10 to 12, further comprising a signal processing unit configured to execute radioactive contamination inspection through use of a pulse wave height value of the electric charge output from the light receiving element,
wherein an amount of the dummy light is set as a light amount significantly different from an amount of the scintillation light in a case of detecting a β-ray, and
wherein the signal processing unit is configured to execute operation confirmation for confirming soundness of a radioactive contamination inspection function from a pulse wave height value generated by the dummy light.

14. A radioactive contamination inspection apparatus according to claim 13, wherein the signal processing unit is configured to increase the amount of the dummy light and simultaneously decrease output of the light receiving element when executing the operation confirmation, to thereby make the amount of the dummy light significantly different from the amount of the scintillation light in the case of detecting a β-ray, and distinguish between a pulse wave height value of the scintillation light in the case of detecting the β-ray emitted from the object to be measured and the pulse wave height value generated by the dummy light.
